(19) Europäisches Patentamt
European Patent Office
Office européen des brevets

(11) EP 0 801 431 A1

(12) EUROPEAN PATENT APPLICATION
published in accordance with Art. 158(3) EPC

(43) Date of publication:
15.10.1997 Bulletin 1997/42

(21) Application number: 96935480.2

(22) Date of filing: 28.10.1996

(51) Int. Cl.6: H01M 4/52

(86) International application number:
PCT/JP96/03158

(87) International publication number:
WO 97/19478 (29.05.1997 Gazette 1997/23)

(84) Designated Contracting States:
DE FR GB

(30) Priority: 22.11.1995 JP 304465/95

(71) Applicant:
MATSUSHITA ELECTRIC INDUSTRIAL CO., LTD.
Kadoma-shi, Osaka-fu, 571 (JP)

(72) Inventors:
• OHTA, Kazuhiro
Hyogo 669-13 (JP)
• OKADA, Yukihiro
Osaka 572 (JP)
• MATSUDA, Hiromu
Kawabe-gun Hyogo 666-02 (JP)
• TOYOGUCHI, Yoshinori
Osaka 581 (JP)

(74) Representative: Dr. Elisabeth Jung
Dr. Jürgen Schirdewahn
Dipl.-Ing. Claus Gernhardt
Clemensstrasse 30
80803 München (DE)

(54) NICKEL HYDROXIDE ACTIVE MATERIAL FOR ALKALINE STORAGE BATTERY AND POSITIVE PLATE

(57) A nickel hydroxide active material for alkaline storage battery which has a high charging efficiency at high temperatures and a high capacity density and a nickel plate electrode using the active material are disclosed. The nickel hydroxide active material contains 10-40 mol % of Mn with respect to the total amount of metallic ions and is made substantially of β-type nickel hydroxide. The X-ray diffraction pattern of this active material observed using Kα rays of Cu has a peak $P_A$ having a peak top in the range of 5°-14° of angle of diffraction 2θ and a peak $P_B$ having a peak top in the range of 18°-20.5°. The relative integrated intensity ratio between the peaks is less than 1/2. The nickel positive electrode contains the above-mentioned active material and a compound, such as $Y_2 O_3$ to raise the oxygen producing potential.

FIG. 1

## Description

TECHNICAL FIELD

The present invention relates to a nickel hydroxide active material for alkaline storage batteries and a positive electrode for alkaline storage batteries using the same.

BACKGROUND ART

A known nickel hydroxide active material for alkaline storage batteries is manganese-contained nickel hydroxide (Japanese Laid-Open Patent Publication Hei 7-335214). According to the publication, nickel (II) hydroxide powder containing manganese of which more than 50 percent is present as tervalent is obtained from an aqueous solution containing Ni(II) salt and Mn (III) salt by coprecipitation using an alkaline solution.

Also, in order to improve the charge efficiency at a high temperature of a nickel positive electrode for an alkaline storage battery, proposed is addition to the positive electrode of one of the compounds of yttrium, iridium, antimony, barium, calcium and beryllium (Japanese Laid-Open Patent Publication Hei 5-28992).

Nickel hydroxide in which 10 to 40 mole percent of nickel is substituted with manganese that is obtained by the method of synthesis of the Japanese Laid-Open Patent Publication Hei 7-335214 has a crystal structure of the $\alpha$-Ni(OH)$_2$-type as basic skeleton which has a peak on the (006) plane within the range of diffraction angle $2\theta$ between 5° and 14° in a powder X-ray diffraction pattern by CuK$\alpha$ radiation.

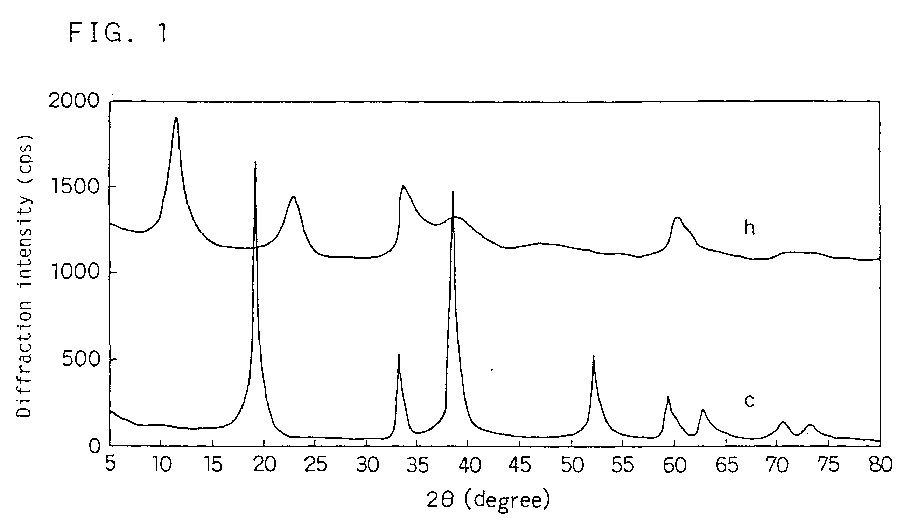

Presently known nickel hydroxide active materials have two crystal structures. One is $\alpha$ type crystal structure where the diffraction angle $2\theta$ value has a peak on the (006) plane within the range between 5° and 14°, and the other is $\beta$ type crystal structure where the diffraction angle $2\theta$ value has a peak on the (001) plane within the range between 18° and 20.5° (FIG. 1).

It is widely known from powder X-ray diffraction measurement results that the $\alpha$ type nickel hydroxide has a wider spacing in the c axis direction than that of the $\beta$ type. Therefore, the true density of the $\alpha$ type nickel hydroxide is smaller than the true density of the $\beta$ type. Moreover, the nickel hydroxide active material now used in alkaline storage batteries has the $\beta$ type crystal structure.

It follows from the above that the positive electrode using the $\alpha$ type active material particles is smaller in volume capacity density than the currently used positive electrode using the $\beta$ type active material particles. Besides, addition of the aforementioned compounds, such as a compound of Y, can improve the charge efficiency at high temperatures up to 45°C, but an even more improvement in the high temperature area is hoped for.

It is accordingly an object of the present invention to provide a nickel hydroxide active material for an alkaline storage battery with excellent charge acceptance under high temperature atmosphere without sacrificing the volume capacity density.

Another object of the present invention is to provide a nickel positive electrode for an alkaline storage battery with high utilization of the active material in an atmosphere over a wide temperature range from normal to even higher temperatures than 45°C.

DISCLOSURE OF INVENTION

The present invention provides a nickel hydroxide active material for an alkaline storage battery comprising nickel hydroxide substantially of the $\beta$ type containing 10 to 40 mole percent of Mn of the total amount of metal ions.

More specifically, the nickel hydroxide active material for an alkaline storage battery of the present invention has a peak P$_A$ with the peak top located within the range of diffraction angle $2\theta$ between 5° and 14° and another peak P$_B$ with the peak top located within the range of diffraction angle $2\theta$ between 18° and 20.5°, the relative integrated intensity ratio of the two peaks P$_A$/P$_B$ being not larger than 1/2, in a powder X-ray diffraction pattern by CuK$\alpha$ radiation.

The present invention provides a method of producing a nickel hydroxide active material for an alkaline storage battery comprising the steps of preparing a nickel hydroxide containing 10 to 40 mole percent of Mn of the total amount of metal ions by reacting an aqueous solution containing bivalent nickel ions and bivalent manganese ions with an aqueous alkaline solution and treating the nickel hydroxide thus obtained in an aqueous alkaline solution at 30 to 120°C.

Further, the present invention provides a nickel positive electrode for an alkaline storage battery of a paste type comprising an active material mixture containing the above-mentioned nickel hydroxide active material and a conductive support, the mixture containing a powder of a compound of at least one element selected from the group consisting of Ca, Sr, Ba, Cu, Ag, Cd, Y, and Yb.

BRIEF DESCRIPTION OF DRAWINGS

FIG. 1 is a graph showing powder X-ray diffraction patterns of a nickel hydroxide active material particle "c" obtained in an example of the present invention and an active material particle "h" of a comparative example.

FIG. 2 is a graph showing powder X-ray diffraction patterns of a nickel hydroxide active material particle "b" obtained in another example of the present invention and an active material particle "g" of another comparative example.

## BEST MODE FOR CARRYING OUT THE INVENTION

The present invention is, as indicated above, directed to an active material for an alkaline storage battery comprising nickel hydroxide substantially of the β type containing specified amounts of Mn. This nickel hydroxide active material is a solid solution with manganese incorporated therein.

Manganese incorporated in the nickel hydroxide active material shifts the charge potential in the "anodic" direction whereby the charge potential decreases and the charge acceptance is improved. The quantity of manganese to be contained in the active material is preferably between 10 and 40 mole percent of the total amount of metal ions in the nickel hydroxide solid solution from the point of drawing out the above-mentioned effect.

Nickel hydroxide active material substantially of the β type can be obtained by a step of reacting an aqueous solution containing bivalent nickel ions and bivalent manganese ions with an aqueous alkaline solution to produce nickel hydroxide containing specified amounts of manganese and a subsequent step of treating the nickel hydroxide thus obtained in an aqueous alkaline solution at 30 to 120°C.

The active material for an alkaline storage battery of the present invention has a peak $P_A$ with the peak top located within the range of diffraction angle $2\theta$ between 5° and 14° and another peak $P_B$ with the peak top located within the range of diffraction angle $2\theta$ between 18° and 20.5°, the relative integrated intensity ratio of the two peaks $P_A/P_B$ being not higher than 1/2, preferably not higher than 1/10, in a powder X-ray diffraction pattern by CuKα radiation.

FIG. 1 shows powder X-ray diffraction patterns by CuKα radiation of the nickel hydroxide active materials containing manganese. In FIG. 1, "c" indicates a typical powder X-ray diffraction pattern of the β type nickel hydroxide of the present invention and "h" is a typical powder X-ray diffraction pattern of the α type nickel hydroxide.

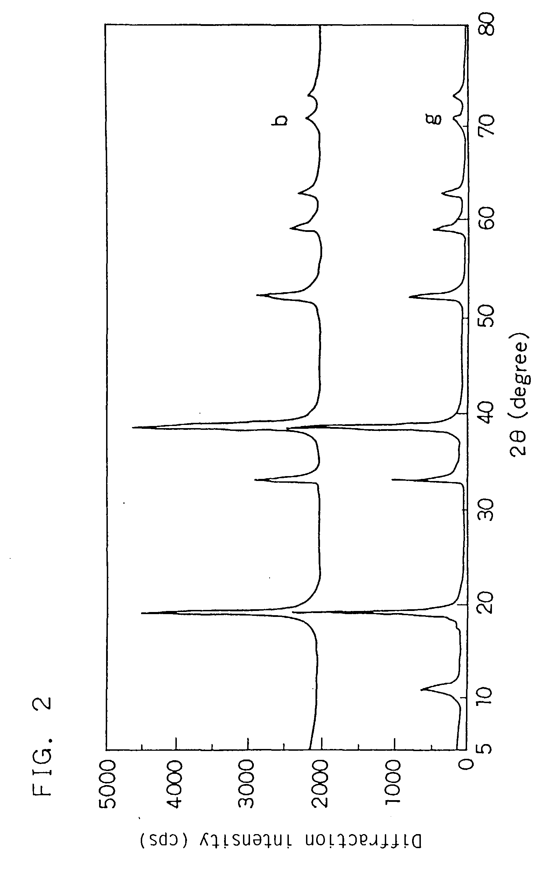

In FIG. 2, "g" represents a powder X-ray diffraction pattern of the nickel hydroxide containing specified amounts of manganese obtained by reacting an aqueous solution containing bivalent nickel ions and bivalent manganese ions with an aqueous alkaline solution, and "b" represents a powder X-ray diffraction pattern of the above-mentioned nickel hydroxide treated in a hot aqueous alkaline solution. In "b", any peaks are hardly found within the range of diffraction angle $2\theta$ between 5° and 14°. From this, it is clear that the β type nickel hydroxide can be obtained by treatment with a hot aqueous alkaline solution.

The hot aqueous alkaline solution is preferably an aqueous solution at 30 to 120°C containing 5 to 50 percent by weight of hydroxide of at least one of the elements Li, K and Na. It is also preferable that the treatment with a hot aqueous alkaline solution should be conducted for at least one hour.

The nickel hydroxide active material of the present invention, as mentioned earlier, has a crystal structure which has a basic skeleton of the β type with a small spacing. Therefore, this material is higher in density than the aforementioned α type active material of the Japanese Laid-Open Patent Publication Hei 7-335214. That permits highly dense filling into the support member and makes it possible to produce a high capacity density positive electrode.

The positive electrode for an alkaline storage battery of the present invention comprises an active material mixture containing the above-mentioned nickel hydroxide active material and a conductive support, the mixture containing a powder of a compound of at least one element selected from the group consisting of Ca, Sr, Ba, Cu, Ag, Cd, Y, and Yb.

Among the conductive supports that can be used here are porous materials with continuous three-dimensional pores, such as foamed metal and metallic fiber felt, punching metal and metal sheet.

As a compound of at least one element selected from the group consisting of Ca, Sr, Ba, Cu, Ag, Cd, Y, and Yb, the following compounds are preferable: $Ca(OH)_2$, $CaO$, $CaF_2$, $CaS$, $CaSO_4$, $CaSi_2O_5$, $CaC_2O_4$, $CaWO_4$, $SrCO_3$, $Sr(OH)_2$, $BaO$, $Cu_2O$, $Ag_2O$, $CdO$, $YF_3$, $Y(OH)_3$, $Y_2(CO_3)_3$, $Y_2O_3$, $YbF_3$, $Yb(OH)_3$ and $Yb_2O_3$. The content in the active material mixture of the powder of these compounds is, in view of energy density, preferably between 0.1 and 5 parts by weight per 100 parts by weight of the nickel hydroxide active material.

If a mixture containing the above-mentioned solid solution nickel hydroxide active material with manganese incorporated therein as described above and the compound of at least one element selected from the group consisting of Ca, Sr and others is used in a positive electrode, a rise in oxygen evolution potential will result, in addition to decreased charge potential. Thus, synergistic effect of these two components will further increase the overpotential for oxygen evolution, a competitive reaction expressed by the formula (2) in charging under high temperature atmosphere. As a result, the charge reaction of the formula (1) to convert nickel hydroxide into nickel oxyhydroxide well proceeds, and the utilization of the positive electrode active material increases under even higher temperature atmosphere.

$$Ni(OH)_2 + OH^- \rightarrow NiOOH + H_2O + e^- \qquad (1)$$

$$2OH^- \rightarrow 1/2 \cdot O_2 + H_2O + e^- \qquad (2)$$

EP 0 801 431 A1

According to the present invention, a nickel hydroxide active material with high charge acceptance under high temperature atmosphere can be obtained without the volume capacity density sacrificed. It is also possible to obtain a positive electrode with high utilization of nickel hydroxide under wide temperature range atmosphere from normal to even higher temperatures than 45°C.

Also widely known are a method to control swelling of the nickel hydroxide active material by incorporating into a solid solution at least one element from among Mg, Zn, Cd and Ca and another method of raising the utilization by incorporating Co into an active material solid solution. In the present invention, too, it is more preferable to incorporate such an element as well as manganese into a nickel hydroxide solid solution.

The present invention will be further illustrated by the following example.

Example 1

An aqueous solution containing 1.125 M nickel (II) sulfate and 0.375 M manganese (II) sulfate, an aqueous solution of 8 M potassium hydroxide and an aqueous solution of 15 M ammonia solution were all continuously pumped into a reaction vessel at the same flow rate while stirring, and active material particles were separated from a suspension containing the active material that was overflowing the reaction vessel. The active material particles obtained were poured over a hot aqueous alkaline solution at 60°C containing 31 percent by weight of KOH and stirred for 24 hours, and thus a solid solution nickel hydroxide active material "c" with 25 mol percent of manganese incorporated therein was obtained.

Changing the concentration ratio of nickel (II) sulfate to manganese (II) sulfate in an aqueous solution containing nickel (II) sulfate and manganese (II) sulfate, solid solution nickel hydroxide active materials "a", "b", "d" and "e" with manganese incorporated therein at various concentrations were obtained.

Comparative Example 1

In the same way as in Example 1 except that an aqueous solution containing nickel (II) sulfate alone was used in place of the aqueous solution containing nickel (II) sulfate and manganese (II) sulfate, an active material particle "f" was obtained.

Comparative Example 2

In the same way as in Example 1 except that treatment with a hot aqueous alkaline solution was not performed, an active material particle "g" was obtained.

Comparative Example 3

An aqueous solution of 0.375 M manganese sulfate and 30 percent by weight of aqueous hydrogen peroxide were mixed to prepare 1,000 ml of a solution. To this solution, an aqueous solution of 2 M potassium hydroxide was added to adjust the pH to 12.5 so that manganese is present in the tervalent state. This solution was then mixed with 4,000 ml of 1.125 M nickel sulfate. To the reaction vessel in which the mixed solution was placed, an aqueous solution of 8 M potassium hydroxide and an aqueous solution of 15 M ammonia were continuously introduced into a reaction vessel at the same flow rate while stirring, and active material particles were separated from a suspension containing the active material that was overflowing the reaction vessel. The active material particles obtained were poured over a hot aqueous alkaline solution at 60°C containing 31 percent by weight of KOH and stirred for 24 hours. In this way an α type nickel hydroxide active material "h" containing 25 mol percent of manganese (III) was obtained.

Table 1 shows the ratios of metal ions in these active material particles and the relative integrated intensity ratios of peak $P_A$/peak $P_B$ in a powder X-ray diffraction pattern.

4

Table 1

| Active material particle | Synthesizing method | Molar ratio | | Integrated intensity ratio $P_A/P_B$ |
|---|---|---|---|---|
| | | Ni | Mn | |
| a | Example 1 | 95 | 5 | < 0.01 |
| b | Example 1 | 90 | 10 | < 0.05 |
| c | Example 1 | 75 | 25 | < 0.08 |
| d | Example 1 | 60 | 40 | < 0.40 |
| e | Example 1 | 50 | 50 | 0.7 |
| f | Comparative Example 1 | 100 | | < 0.01 |
| g | Comparative Example 2 | 90 | 10 | 0.65 |
| h | Comparative Example 3 | 75 | 25 | > 10 |

The relative integrated intensity ratio of $P_A/P_B$ was not higher than 1/10 with the active material particles "a" to "c" and "f", while not higher than 1/2 with the active material particle "d". But with the active material particle "e" which contained 50 mole percent of manganese, the $P_A/P_B$ ratio exceeded 1/2. Also, the active material particle "g" of Comparative Example 2 which was not treated with the hot alkaline solution showed a $P_A/P_B$ ratio of more than 1/2. The active material particle "h" of Comparative Example 3 was not lower than 10 in integrated intensity ratio.

FIG. 1 shows powder X-ray diffraction patterns of the active material particles "c" and "h". FIG. 2 shows powder X-ray diffraction patterns of the active material particle "b" which was treated with a hot alkaline solution and the active material particle "g" which was not treated with a hot alkaline solution.

Then, 100 parts by weight of each of these nickel hydroxide active material particles were mixed and made into a paste with 10 parts by weight of cobalt hydroxide and water. This paste was filled into a foamed nickel substrate with a surface density of 600 g/m$^2$, then dried, pressure-molded, and immersed in an aqueous dispersion of a fluorocarbon resin powder. After that, the substrate was dried again and cut to a size of 90 × 70 mm to give a nickel positive electrode. The electrodes using the active materials "a" to "h" were coded "A" to "H", respectively.

Similarly, 100 parts by weight of the active material particle "c" containing 25 mole percent of manganese in Example 1 were mixed and made into a paste with 10 parts by weight of cobalt hydroxide, 1 part by weight of $Y_2O_3$ and water. A nickel positive electrode prepared in the same way was named "I".

Each of these positive electrodes "A" to "I" was sandwiched between separators and two pieces of known hydrogen storage alloy negative electrodes which have a larger theoretical capacity than the positive electrode to produce storage batteries (flooded cells) with 31 percent by weight of an aqueous solution of potassium hydroxide as an electrolyte.

These storage batteries were subjected to a charging-discharging test in which the batteries were charged at a 10-hour rate for 15 hours, and, after left standing for 3 hours, discharged at a 5-hour rate at 20°C until the terminal voltage fell to 1 V. Charging was done at 20, 45 and 55°C, while discharging was all at 20°C.

Table 2 shows the discharge capacity densities for the battery charged at 20°C and the ratios of the discharge capacity for the batteries charged at 45 and 55°C to the discharge capacity for the battery charged at 20°C.

Table 2

| Positive electrode | Discharge capacity density (mAh/cc) 20°C | Ratio of discharge capacity % (to the battery charged at 20°C) | |
|---|---|---|---|
| | | 45°C | 55°C |
| A | 490 | 65 | 45 |
| B | 480 | 78 | 60 |
| C | 500 | 89 | 70 |
| D | 350 | 88 | 69 |
| E | 180 | 87 | 68 |
| F | 530 | 60 | 38 |
| G | 210 | 87 | 69 |
| H | 290 | 89 | 70 |
| I | 500 | 93 | 80 |

First, a comparison of capacity densities for the batteries charged at 20°C confirmed that if the content of manganese exceeds 40 mole percent, the capacity density decreases, and that at 50 mole percent, it drops to 200 mAh/cc or lower. That is attributable to this: as described earlier, the value of the aforementioned peak integrated intensity ratio became close to 1/2 at 40 mole percent of manganese content in the powder X-ray diffraction pattern and the value exceeded 1/2 with the 50 mole percent manganese-contained active material particle "g", and as a result, the density of the active material particle decreased. From the viewpoint of capacity density, it is preferable that the content of manganese is not higher than 40 mole percent of the total amount of metal ions in the solid solution nickel hydroxide .

It is also noted that if the peak integrated intensity ratio exceeds 1/2, the capacity density will drop substantially because of the presence of abundant particles of the crystal structure with a large spacing. To further improve the capacity density, it is preferable that the integrated intensity ratio is not higher than 1/10.

As is clear from the above results, it is evident that the positive electrode using a nickel hydroxide active material particle containing manganese is higher in charge efficiency than that containing no manganese at a high temperature. This is because incorporation of manganese results in a shift of the charge potential in the "anodic" direction. With the content of manganese less than 10 mole percent (positive electrode "A"), the effect is small. To improve the charge efficiency at a high temperature, therefore, it is preferable that the content of manganese is not lower than 10 mole percent.

From the above, it can be said that the content of manganese is preferably 10 to 40 mole percent.

Also, the positive electrode "C" comprising the active material particle "c" containing 25 mole percent of manganese according to the present invention is much improved over the positive electrode "H" comprising the active material "h" containing 25 mole percent of manganese of Comparative Example 3 in capacity density for the battery charged at 20°C. The reason for this is, as is evident from the powder X-ray diffraction patterns shown in FIG. 1, that the active material "h" of Comparative Example 3, which has a very high peak integrated intensity ratio, is an $\alpha$ type nickel hydroxide active material, while the active material "c" of Example 1, which has an almost zero integrated intensity ratio, is substantially a $\beta$ type nickel hydroxide active material, that is, the active material itself highly intensifies in density.

Another comparison between the positive electrode "C" using the active material "c" and the positive electrode "I" of the active material "c" mixed with $Y_2O_3$ shows that addition of $Y_2O_3$ can further improve the charge efficiency at a high temperature. This is because addition of $Y_2O_3$ to the positive electrode is effective for raising the oxygen evolution potential during charging.

The capacity ratio of the positive electrode "I" was about 80 percent of that for the battery charged at 20°C even when charged at a temperature as high as 55°C. The positive electrode of the active material "f" from the comparative example, which was mixed with $Y_2O_3$, was examined for the charge efficiency at a high temperature, and it was found that the capacity ratio after charging at temperatures up to 45°C was as high as 90 percent of that for the battery charged at 20°C. However, the capacity ratio after charging at 55°C was down to some 70 percent of that for the battery charged at 20°C. From these results, it was discovered that a further improvement could be achieved by combining the nickel hydroxide active material containing manganese of the present invention and $Y_2O_3$ described in the Japanese Laid-Open Patent Publication Hei 5-28992, instead of adding $Y_2O_3$ alone. This results from the synergistic effect of the addition to nickel hydroxide of manganese that shifts the charge potential in the "anodic" direction and the addition of

$Y_2O_3$ which raises the oxygen evolution potential.

In the aforementioned Examples, $Y_2O_3$ was used as a compound to raise the oxygen evolution potential. The identical results can be obtained using, in place of $Y_2O_3$, the following compounds: $Ca(OH)_2$, $CaO$, $CaF_2$, $CaS$, $CaSO_4$, $CaSi_2O_5$, $CaC_2O_4$, $CaWO_4$, $SrCO_3$, $Sr(OH)_2$, $BaO$, $Cu_2O$, $Ag_2O$, $CdO$, $YF_3$, $Y(OH)_3$, $Y_2(CO_3)_3$, $YbF_3$, $Yb(OH)_3$ or $Yb_2O_3$.

INDUSTRIAL APPLICABILITY

As has been described, according to the present invention, a positive electrode active material for an alkaline storage battery can be obtained which is excellent in charge efficiency and capacity density at a high temperature. With the use of this active material, a high-capacity density nickel positive electrode can be obtained which is excellent in charge efficiency at a high temperature.

**Claims**

1. A nickel hydroxide active material for an alkaline storage battery comprising nickel hydroxide substantially of the β type containing 10 to 40 mole percent of manganese of the total amount of metal ions.

2. The nickel hydroxide active material for an alkaline storage battery in accordance with Claim 1, wherein said nickel hydroxide active material has a peak $P_A$ with the peak top located within the range of diffraction angle $2\theta$ between 5° and 14° and another peak $P_B$ with the peak top located within the range of diffraction angle $2\theta$ between 18° and 20.5°, the relative integrated intensity ratio of said two peaks $P_A/P_B$ being not larger than 1/2, in a powder X-ray diffraction pattern by $CuK\alpha$ radiation.

3. The nickel hydroxide active material for an alkaline storage battery in accordance with Claim 2, wherein said integrated intensity ratio $P_A/P_B$ is not larger than 1/10.

4. The nickel hydroxide active material for an alkaline storage battery in accordance with Claim 1, wherein said nickel hydroxide active material is obtained through a step of producing nickel hydroxide containing specified amounts of Mn by reacting an aqueous solution containing bivalent nickel ions and bivalent manganese ions with an aqueous alkaline solution and a subsequent step of treating the nickel hydroxide thus obtained in an aqueous alkaline solution at 30 to 120°C.

5. A method of producing a nickel hydroxide active material for an alkaline storage battery comprising the steps of preparing nickel hydroxide containing 10 to 40 mole percent of Mn of the total amount of metal ions by reacting an aqueous solution containing bivalent nickel ions and bivalent manganese ions with an aqueous alkaline solution and treating the nickel hydroxide thus obtained in an aqueous alkaline solution at 30 to 120°C.

6. A nickel positive electrode for an alkaline storage battery comprising an active material mixture and a conductive support, said active material mixture containing the nickel hydroxide active material in accordance with Claim 1.

7. The nickel positive electrode for an alkaline storage battery in accordance with Claim 6, wherein said active material mixture additionally contains a compound of at least one element selected from the group consisting of Ca, Sr, Ba, Cu, Ag, Cd, Y, and Yb.

8. The nickel positive electrode for an alkaline storage battery in accordance with Claim 7, wherein said compound is selected from the group consisting of $Ca(OH)_2$, $CaO$, $CaF_2$, $CaS$, $CaSO_4$, $CaSi_2O_5$, $CaC_2O_4$, $CaWO_4$, $SrCO_3$, $Sr(OH)_2$, $BaO$, $Cu_2O$, $Ag_2O$, $CdO$, $YF_3$, $Y(OH)_3$, $Y_2(CO_3)_3$, $Y_2O_3$, $YbF_3$, $Yb(OH)_3$, and $Yb_2O_3$.

9. The nickel positive electrode for an alkaline storage battery in accordance with Claim 8, wherein the content of said compound is 0.1 to 5 parts by weight per 100 parts by weight of said nickel hydroxide active material.

FIG. 1

EP 0 801 431 A1

FIG. 2

| INTERNATIONAL SEARCH REPORT | International application No. |
|---|---|
| | PCT/JP96/03158 |

**A. CLASSIFICATION OF SUBJECT MATTER**

Int. $Cl^6$   H01M4/52

According to International Patent Classification (IPC) or to both national classification and IPC

**B. FIELDS SEARCHED**

Minimum documentation searched (classification system followed by classification symbols)

Int. $Cl^6$   H01M4/52

Documentation searched other than minimum documentation to the extent that such documents are included in the fields searched

| | | | |
|---|---|---|---|
| Jitsuyo Shinan Koho | 1926 – 1996 | Jitsuyo Shinan Toroku | |
| Kokai Jitsuyo Shinan Koho | 1971 – 1997 | Koho | 1996 – 1997 |
| Toroku Jitsuyo Shinan Koho | 1994 – 1997 | | |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 5-21064, A (Matsushita Electric Industrial Co., Ltd.), January 29, 1993 (29. 01. 93)(Family: none) | 1 – 9 |

☐ Further documents are listed in the continuation of Box C.   ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier document but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| January 17, 1997 (17. 01. 97) | January 28, 1997 (28. 01. 97) |

| Name and mailing address of the ISA/ | Authorized officer |
|---|---|
| Japanese Patent Office | |
| Facsimile No. | Telephone No. |

Form PCT/ISA/210 (second sheet) (July 1992)